## Europäisches Patentamt
## European Patent Office
## Office européen des brevets

(11) Numéro de publication: **0 083 889**
**B1**

(12) # FASCICULE DE BREVET EUROPEEN

(45) Date de publication du fascicule du brevet:
**12.03.86**

(51) Int. Cl.⁴: **F 16 L 51/02**

(21) Numéro de dépôt: **82402358.4**

(22) Date de dépôt: **22.12.82**

(54) **Soufflet de dilatation.**

(30) Priorité: **30.12.81 FR 8124493**

(43) Date de publication de la demande:
**20.07.83 Bulletin 83/29**

(45) Mention de la délivrance du brevet:
**12.03.86 Bulletin 86/11**

(84) Etats contractants désignés:
**BE DE GB IT SE**

(56) Documents cités:
**FR - A - 451 327**
**US - A - 1 929 401**
**US - A - 2 713 503**
**US - A - 2 832 613**

(73) Titulaire: **Société Tuyaux Flexibles RUDOLPH, 41, rue de Lourmel, F-75015 Paris (FR)**

(72) Inventeur: **Burnel, Philippe, 1, rue André Colledeboeuf, F-75016 Paris (FR)**
Inventeur: **Gerardot, Claude, 4, rue Lavoisier, F-78500 Sartrouville Yvelines (FR)**

(74) Mandataire: **Bloch, Robert et al, 39 avenue de Friedland, F-75008 Paris (FR)**

## Description

La présente invention concerne un soufflet de dilatation pourvu d'ondes annulaires de dilatation de diamètres interne et externe déterminés, avec, à l'intérieur de chaque onde, des portions annulaires de renforcement agencées pour pouvoir être introduites, chacune, dans la partie tubulaire de diamètre interne du soufflet et être assemblées en un anneau de renforcement, ainsi que des moyens de blocage des portions annulaires, chaque portion annulaire de renforcement possédant un arc interne et un arc externe dont les cordes qui les sous-tendent ont des longueurs au plus égales au diamètre interne du soufflet.

On connaît déjà un tel soufflet de dilatation, notamment par le brevet français n° 451 327.

Les soufflets de dilatation classiques ne peuvent supporter qu'une pression de service, intérieure et/ou extérieure, limitée.

On a déjà proposé, pour augmenter cette pression de service maximale, soit d'augmenter l'épaisseur de la paroi des soufflets, sout d'augmenter le nombre des parois fines constitutives des soufflets. Dans le premier cas, c'est la durée de vie des soufflets qui en limite l'épaisseur, inversement proportionnelle à cette durée de vie. Dans le second cas, ce sont les phénomènes de glissement entre parois qui limitent le nombre des parois fines pouvant être associées.

On a par ailleurs déjà proposé, en ce qui concerne la seule pression intérieure limite, de renforcer les ondes des soufflets par des renforts extérieurs.

Ceux-ci peuvent être constitués par deux pièces annulaires disposées, après fabrication, entre deux ondes et réunies mécaniquement entre elles.

Mais, de préférence, quand il s'agit de soufflets fabriqués par hydroformage, ce sont les moules de fabrication eux-mêmes qui, maintenus en place après la fabrication, servent de moyens de renforcement extérieurs monoblocs.

Si on veut renforcer un soufflet de dilatation pour qu'il résiste à des pressions extérieures plus élevées, donc à l'aide de renforts intérieurs, il est impératif de les monter après la fabrication du soufflet. En effet, la formation des ondes du soufflet en cours de fabrication, autrement dit l'expansion du tube de départ, empêche de pouvoir disposer à l'intérieur de celui-ci, tout renfort qui serait logé dans une des ondes et aurait un diamètre extérieur forcément plus grand que le diamètre interne de l'onde, c'est-à-dire le diamètre du tube de départ.

En ce qui concerne le soufflet de dilatation du brevet français n° 451 327 certes, il comporte des pièces intérieures pouvant être montées après la fabrication du soufflet.

Toutefois, les pièces de ce dernier soufflet sont en nombre important et assemblées par vis et goujons. Il en résulte une faiblesse mécanique de ces pièces qui ne peuvent donc pas assurer une fonction de renforcement mécanique du soufflet, lorsque celui-ci est soumis à une pression extérieure importante. Les pièces de ce soufflet ne sont en fait destinées qu'à limiter la contraction longitudinale du soufflet. Elles ne jouent pas à proprement parler un rôle de renfort.

La présente invention vise donc à pallier les inconvénients de ce dernier soufflet.

A cet effet, l'invention concerne un soufflet du type mentionné ci-dessus, caractérisé par le fait que, au moins l'une des portions annulaires a sa corde interne au moins aussi grande que sa corde externe.

Le soufflet de l'invention comporte donc des portions de renforcement, en nombre pouvant être très limité, qui s'arc-boutent les unes sur les autres, et restent assemblées sous l'effet de la pression extérieure, sans autres moyens tels que les vis et goujons de l'art antérieur.

Dans une forme de réalisation préférée du soufflet de l'invention, au moins l'une des portions annulaires de renforcement a une corde interne et une corde externe parallèles et de même longueur.

Dans ce dernier cas, il est avantageux de prévoir un anneau de renforcement comportant deux portions annulaires identiques ayant chacune une corde interne et une corde externe dont les flèches sont confondues et dont les distances à l'axe du soufflet sont égales, la longueur de la corde interne étant légèrement plus grande que le tiers de la longueur de la corde externe.

L'invention sera mieux comprise à l'aide de la description suivante d'une forme de réalisation préférée du soufflet de l'invention, en référence aux dessins annexés, sur lesquels:

la fig. 1 représente une vue radiale d'une des ondes du soufflet avec une première portion annulaire de renforcement, avant et après introduction;

la fig. 2 représente une coupe perpendiculaire à l'axe de l'onde de la fig. 1;

la fig. 3 représente une vue radiale de l'onde avec une deuxième portion annulaire de renforcement, identique à la première, avant et après introduction;

la fig. 4 représente une coupe perpendiculaire à l'axe de l'onde de la fig. 3;

la fig. 5 représente une vue radiale de l'onde, avec une troisième portion annulaire de renforcement, avant et après introduction;

la fig. 6 représente une coupe perpendiculaire à l'axe de l'onde de la fig. 5;

la fig. 7 représente une vue radiale de l'onde, avec une quatrième et dernière portion annulaire de renforcement, identique à la troisième, avant et après introduction;

la fig. 8 représente une coupe perpendiculaire à l'axe de l'onde de la fig. 7;

la fig. 9 représente une coupe perpendiculaire à l'axe de l'onde, avec l'anneau de renforcement intérieur et une bague de blocage, avant et après introduction;

la fig. 10 représente une coupe perpendiculaire à l'axe de l'onde de la fig. 9;

la fig. 11 représente une vue radiale, avec demi-coupe axiale, du soufflet de l'invention, et

la fig. 12 représente une vue radiale, avec demi-coupe axiale, du soufflet de la fig.11, avec anneaux de renforcement extérieurs.

Le soufflet, ou joint ou compensateur, de dilatation de l'invention, qui va être décrit, est un corps 1 de forme générale tubulaire, d'axe 5, comportant des ondes de dilatation 2 radiales annulaires identiques, quatre en l'espèce bien qu'il ne s'agisse pas ici d'un nombre limitatif de l'invention. Ces ondes régulièrement espacées, ménagent une partie tubulaire 3 de diamètre interne déterminé, et une partie 4 de diamètre externe déterminé, plus grand que celui de la partie interne 3. Ces ondes ont été obtenues, par exemple par hydroformage, procédé suffisamment connu des spécialistes pour qu'il soit inutile de le décrire ici. Ces ondes possèdent des flancs radiaux, sensiblement orthogonaux à l'axe 5 du soufflet.

On va maintenant décrire la composition, l'introduction et le blocage d'un anneau de renforcement intérieur associé à l'une des ondes 2, étant entendue que chaque onde 2 est pourvue d'un tel anneau.

L'anneau de renforcement intérieur 6, une fois assemblé (fig. 8 à 12), présente donc une forme annulaire dont la partie interne 7 est légèrement plus épaisse que la partie externe 8, une joue rétrécie 9, de plus faible épaisseur que la partie externe, réunissant les deux parties interne et externe. La partie externe 8 de l'anneau a sensiblement la même épaisseur que l'onde 2.

L'anneau 6 comporte deux paires de portions annulaires identiques (10, 11) et (12, 13).

Chaque portion annulaire (10-13) possède un arc interne et un arc externe. Les cordes qui sous-tendent ces arcs ont toutes une longueur inférieure au diamètre de la partie tubulaire interne 3. Il faut en effet pouvoir y introduire ces portions annulaires. Il suffit d'ailleurs que la longueur de ces cordes soit juste légèrement inférieure à ce diamètre interne.

Les portions annulaires 10, 11 possèdent un arc interne 14 et un arc externe 15 respectivement de mêmes rayons que les parties tubulaires 3, 4. Ces arcs sont sous-tendus par des cordes qui s'étendent sur une même droite. En d'autres termes, les deux cordes qui sous-tendent ces deux arcs ont des flèches confondues et leurs distances à l'axe 5 du soufflet sont égales. La corde de l'arc interne 14 a une longueur légèrement plus grande que le tiers de la longueur de la corde de l'arc externe 15, pour une raison qui apparaîtra plus loin. En d'autres termes, cette corde interne est légèrement plus grande que chacune des deux portions adjacentes de la corde externe.

Les portions annulaires 12, 13 possèdent un arc interne 16 et un arc externe 17 respectivement de mêmes rayons que les parties tubulaires 3, 4. Les deux cordes qui sous-tendent respectivement ces deux arcs sont parallèles et de même longueur. La longueur de l'arc externe 17 des portions 12, 13 est égale à la différence entre la moitié de la circonférence de la partie tubulaire externe 4 et la longueur de l'arc externe 15 des portions 10, 11. La longueur de l'arc interne 16 des portions 12, 13 est égale à la différence entre la moitié de la circonférence de la partie tubulaire interne 3 et la longueur de l'arc interne 14 des portions 10, 11.

Les portions annulaires 12, 13 possèdent deux plans de joint 18, 19 perpendiculaires à leurs deux cordes sous-tendant leurs arcs interne 16 et externe 17, qui sont destinés à coopérer avec les deux portions, comprises entre les deux arcs 14 et 15, des deux cordes externes des portions annulaires 10, 11.

Dans la description qui précède, on a bien entendu fait abstraction de l'épaisseur des portions annulaires, évoquée plus haut.

Ayant décrit les portions annulaires de l'anneau de renforcement 6, décrivons maintenant leur introduction dans l'onde 2 du soufflet 1.

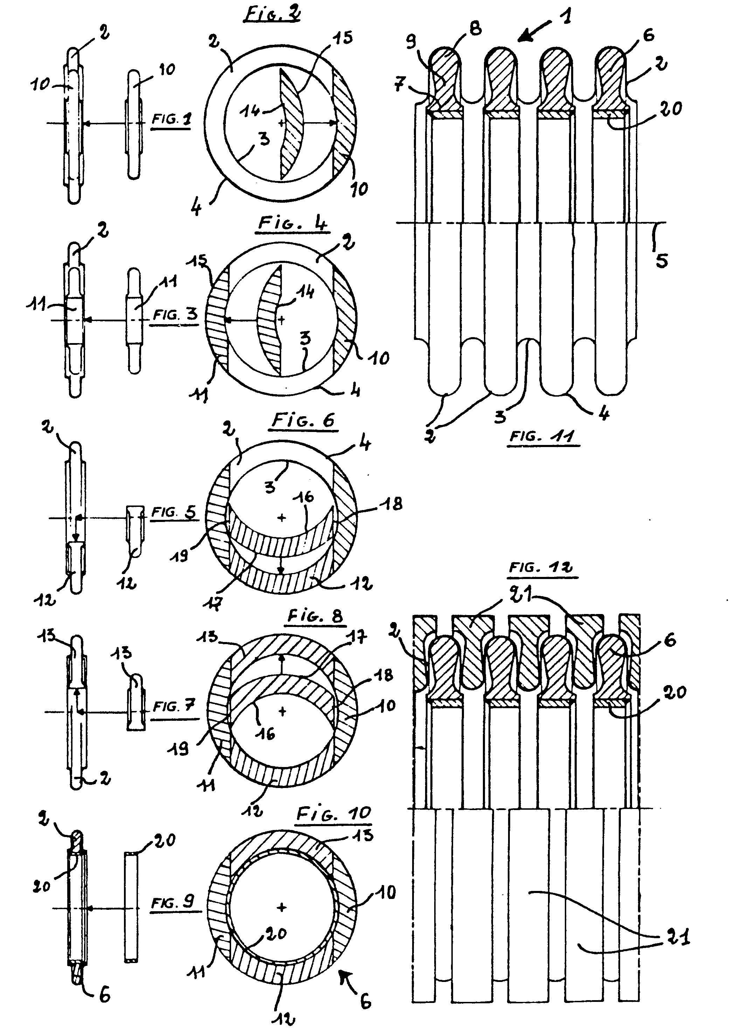

Disposant donc des quatre portions annulaires 10-13, on prend la première portion 10, on l'introduit axialement (fig. 1) dans la partie tubulaire 3 et on la glisse radialement (fig. 2) dans l'onde 2, de sorte que les deux cordes de ses deux arcs 14, 15 soient verticales, sur les figures. On prend ensuite la deuxième portion 11, on l'introduit axialement (fig. 3) dans la partie 3 et on la glisse radialement (fig. 4), dans la direction opposée à celle de la portion 10, dans l'onde 2, de sorte que les quatre cordes internes et externes des deux portions 10, 11 soient parallèles. Puis on prend la troisième portion 12, on l'introduit axialement (fig. 5) dans la partie 3, et on la glisse radialement (fig. 6), dans une direction orthogonale à celle des portions 10, 11, dans l'onde 2, de sorte que ses plans de joints 18, 19 glissent le long des portions correspondantes des cordes externes des portions 10, 11, constituant donc également des plans de joint. Enfin, on prend la quatrième portion 13, on l'introduit axialement (fig. 7) dans la partie 3 et on la glisse radialement (fig. 8), dans la direction opposée à celle de la portion 12, dans l'onde 2, de sorte que ses plans de joint 18, 19 glissent le long des autres portions correspondantes des cordes externes des portions 10, 11, constituant donc également des plans de joint.

On notera que l'introduction axiale dans la partie 3 des portions 12, 13 est permise, grâce au fait que la longueur de leurs bords 18, 19, égale à celle des portions correspondantes des cordes externes des portions 10, 11, est sensiblement plus petite que la longueur des cordes internes des portions 10, 11.

L'anneau de renforcement intérieur 6 est alors assemblé dans l'onde 2, avec quatre portions annulaires jointes, suivant deux plans parallèles et équidistants de l'axe 5 du soufflet 1, les portions annulaires s'arc-boutant les unes sur les autres.

On introduit alors axialement une bague 20, de diamètre externe sensiblement égal au diamètre interne de la partie tubulaire 3, pour bloquer les quatre portions annulaires dans l'onde 2 et maintenir l'anneau 6 en position de renforcement, qu'on fixe ensuite par exemple par soudage ou sertissage.

On réitère ces opérations pour chaque onde 2.

On a décrit un anneau de renforcement intérieur comprenant quatre portions annulaires. C'est la solution la plus simple, qui se caractérise par la présence de quatre pièces seulement, dont deux ont chacune une corde interne et une corde externe parallèles, de même longueur, et délimitant deux bords latéraux perpendiculaires à ces cordes. Rappelons ici qu'il suffit que l'une des portions annulaires constitutives de l'anneau de renforcement posède deux bords parallèles ou divergeant vers l'intérieur pour pouvoir introduire cette portion dans l'onde après la mise en place des précédentes. En d'autres termes, la corde interne de cette dernière portion annulaire doit avoir une longueur égale ou supérieure à celle de la corde externe.

Les sommets des anneaux de renforcement 6, tout comme ceux des ondes de dilatation 2, représentés sur les dessins, sont arrondis. On peut encore vouloir disposer autour des ondes 2, des renforts raidisseurs comportant au moins deux pièces, épousant, dans leur partie interne, les ondes 2, et présentant un bord annulaire externe, plat, parallèle à l'axe 5 du soufflet 1, les pièces de chacun des renforts externes étant bloquées par une bague externe de verrouillage. Les renforts raidisseurs contribuent à empêcher que les ondes ne «montent». Le sommet des ondes de dilatation pourrait d'ailleurs être également plat.

Enfin, on peut vouloir prévoir, entre les ondes, des anneaux de renforcement extérieurs, bien connus des spécialistes, pour supporter également une pression interne élevée, renforts extérieurs en plusieurs pièces ou, de préférence, monoblocs et constitués par les moules 21 eux-mêmes du procédé d'obtention des ondes par hydroformage (fig. 12).

Les anneaux de renforcement intérieurs du soufflet de l'invention permettent à celui-ci de supporter des pressions de service externes très élevées. A titre d'exemple, un soufflet de dilatation classique, ne supportant qu'une pression de service externe de quelques bars, peut, grâce à ces anneaux de renforcement intérieurs, supporter une pression extérieure de plusieurs centaines de bars.

Il va de soi, comme on l'a déjà souligné plus haut, que l'invention s'applique également à un manchon de raccordement pourvu d'au moins une gorge annulaire destinée à recevoir un joint annulaire d'étanchéité, de diamètres interne et externe déterminés, caractérisé par le fait que le joint comprend des portions annulaires agencées pour pouvoir être introduites dans la partie de diamètre interne du manchon et être assemblées pour former le joint, ainsi que des moyens de blocage des portions annulaires du joint, chaque portion annulaire possédant un arc interne et un arc externe dont les cordes qui les sous-tendent ont des longueurs au plus égales au diamètre interne du manchon, et au moins l'une des portions annulaires du joint a sa corde interne au moins aussi grande que sa corde externe.

**Revendications**

1. Soufflet de dilatation pourvu d'ondes annulaires de dilatation (2) de diamètres interne (3) et externe (4) déterminés, avec, à l'intérieur de chaque onde (2), des portions annulaires de renforcement (10-13) agencées pour pouvoir être introduites, chacune, dans la partie tubulaire de diamètre interne (3) du soufflet (1) et être assemblées en un anneau de renforcement (6), ainsi que des moyens de blocage (20) des portions annulaires (10-13), chaque portion annulaire de renforcement (10-13) possédant un arc interne (14, 16) et un arc externe (15, 17) dont les cordes qui les sous-tendent ont des longueurs au plus égales au diamètre interne (3) du soufflet (1), soufflet caractérisé par le fait que, au moins l'une des portions annulaires (12,13) a sa corde interne au moins aussi grande que sa corde externe.

2. Soufflet selon la revendication 1, dans lequel au moins l'une des portions annulaires (12, 13) de renforcement a une corde interne (16) et une corde externe (17) parallèles et de même longueur.

3. Soufflet selon la revendication 2, dans lequel l'anneau de renforcement comporte deux portions annulaires identiques (10, 11) ayant chacune une corde interne (14) et une corde externe (15) dont les flèches sont confondues et dont les distances à l'axe du soufflet sont égales, la longueur de la corde interne étant légèrement plus grande que le tiers de la longueur de la corde externe.

4. Soufflet selon la revendication 3, dans lequel l'anneau de renforcement (6) comporte quatre portions annulaires (10-13) jointes suivant deux plans (18, 19) parallèles et équidistants de l'axe (5) du soufflet (1).

5. Soufflet selon l'une des revendications 1 à 4, dans lequel les moyens de blocage de l'anneau de renforcement comprennent une bague de blocage (20) de diamètre externe sensiblement égal au diamètre de la partie interne (3) du soufflet (1).

6. Soufflet selon l'une des revendications 1 à 5, dans lequel sont prévus autour des ondes des renforts raidisseurs à bord annulaire externe plat verrouillés chacun par une bague.

7. Soufflet selon l'une des revendications 1 à 6, dans lequel sont prévus des anneaux de renforcement extérieurs (21).

8. Manchon de raccordement pourvu d'au moins une gorge annulaire destinée à recevoir un joint annulaire d'étanchéite, de diamètres interne et externe déterminés, dans lequel le joint comprend des portions annulaires agencées pour pouvoir être introduites dans la partie de diamètre interne du manchon et être assemblées pour former le joint, ainsi que des moyens de blocage des portions annulaires du joint, chaque portion annulaire possédant un arc interne et un arc externe dont les cordes qui les sous-tendent ont des longueurs au plus égales au diamètre interne du manchon, manchon caractérisé par le fait que, au moins l'une des portions annulaires du joint a sa corde interne au moins aussi grande que sa corde externe.

9. Corps tubulaire pourvu d'au moins une gorge annulaire destinée à recevoir un corps annulaire, de diamètre interne et externe déterminés, dans lequel le corps annulaire comprend des portions annulaires agencées pour pouvoir être introduites dans la partie de diamètre interne du corps tubulaire et être assemblées pour former le corps annulaire, ainsi que des moyens de blocage des portions annulaires du corps annulaire, chaque portion annulaire possédant un arc interne et un arc externe dont les cordes qui les sous-tendent ont des longueurs au plus égales au diamètre interne du corps tubulaire, caractérisé par le fait que, au moins l'une des portions annulaires du corps annulaire a sa corde interne au moins aussi grande que sa corde externe.

**Patentansprüche**

1. Dehnungsbalg, der ringförmige Dehnungswellen (2) mit bestimmtem Innendurchmesser (3) und bestimmtem Aussendurchmesser (4) aufweist und im Inneren jeder Welle (2) Verstärkungsringabschnitte (10-13) enthält, die einzeln in das rohrförmige Innere mit dem Innendurchmesser (3) des Balges (1) einführbar und zu einem Verstärkungsring (6) zusammensetzbar sind, wobei ausserdem Verriegelungsorgane (20) für die Ringabschnitte (10-13) vorgesehen sind, die jeweils einen Innenbogen (14, 16) und einen Aussenbogen (15, 17) haben, deren Sehnen, die sie schneiden, höchstens eine Länge gleich dem Innendurchmesser (3) des Balges (1) haben, dadurch gekennzeichnet, dass mindestens einer der Ringabschnitte (12,13) eine Innenbogensehne hat, die mindestens gleich lang ist wie seine Aussenbogensehne.

2. Dehnungsbalg nach Anspruch 1, bei dem mindestens einer der Verstärkungsringabschnitte (12, 13) eine Innenbogensehne (16) und eine dazu parallele Aussenbogensehne gleicher Länge hat.

3. Dehnungsbalg nach Anspruch 2, bei dem der Verstärkungsring zwei identische Ringabschnitte (10, 11) aufweist, von denen jeder eine Innenbogensehne (14) und eine Aussenbogensehne (15) hat, deren Pfeilhöhen zusammenfallen und deren Abstände von der Balgachse gleich sind, wobei die Länge der Innenbogensehne geringfügig grösser ist als ein Drittel der Länge der Aussenbogensehne.

4. Dehnungsbalg nach Anspruch 3, bei dem der Verstärkungsring (6) vier Ringabschnitte (10-13) hat, die im Bereich von zwei parallelen und zur Achse (5) des Balges (1) äquidistanten Ebenen (18,19) gegeneinander anliegen.

5. Dehnungsbalg nach einem der Ansprüche 1 bis 4, bei dem die Verriegelungsorgane für den Verstärkungsring einen Verriegelungsring (10) umfassen, dessen Aussendurchmesser im wesentlichen gleich dem Innendurchmesser (3) des Balges (1) ist.

6. Dehnungsbalg nach einem der Ansprüche 1 bis 5, bei dem um die Wellen Verstärkungselemente mit glattem Aussenringrand herumgelegt sind, wobei diese Elemente jeweils mittels eines Ringes zusammengehalten werden.

7. Dehnungsbalg nach einem der Ansprüche 1 bis 6, bei dem äussere Verstärkungsringe (21) vorgesehen sind.

8. Verbindungsmuffe, die mit mindestens einer Ringnut zur Aufnahme eines ringförmigen Dichtungs-Dehnungsausgleichers mit bestimmtem Innendurchmesser und bestimmtem Aussendurchmesser versehen ist, wobei der Dehnungsausgleicher Ringabschnitte aufweist, die in den Muffenabschnitt mit dem Innendurchmesser der Muffe einsetzbar und zur Bildung des Dehnungsausgleichers zusammensetzbar sind, wobei ausserdem Verriegelungsorgane für die Ringabschnitte des Dehnungsausgleichers vorgesehen sind, wobei jeder Ringabschnitt einen Innenbogen und einen Aussenbogen hat, deren Sehnen, die sie schneiden, höchstens eine Länge gleich dem Innendurchmesser der Muffe haben, dadurch gekennzeichnet, dass mindestens einer der Ringabschnitte des Dehnungsausgleichers eine Innenbogensehne hat, die mindestens gleich lang ist wie seine Aussenbogensehne.

9. Rohrkörper, der mit mindestens einer Ringnut zur Aufnahme eines Ringkörpers mit bestimmtem Innendurchmesser und bestimmtem Aussendurchmesser versehen ist, wobei der Ringkörper Ringabschnitte aufweist, die in den Teil mit dem Innendurchmesser des Rohrkörpers einsetzbar und zur Bildung des Ringkörpers zusammensetzbar sind, wobei ausserdem Verriegelungsorgane für die Ringabschnitte des Ringkörpers vorgesehen sind, wobei jeder Ringabschnitt einen Innenbogen und einen Aussenbogen hat, deren Sehnen, die sie schneiden, höchstens eine Länge gleich dem Innendurchmesser des Rohrkörpers haben, dadurch gekennzeichnet, dass mindestens einer der Ringabschnitte des Ringkörpers eine Innenbogensehne hat, die mindestens gleich lang ist wie seine Aussenbogensehne.

**Claims**

1. Expanding bellows provided with annular expanding corrugations (2) of determined inner (3) and outer (4) diameters, with, inside each corrugation (2), annular reinforcing portions (10-13) arranged to be introduced, each, into the tubular part of inner diameter (3) of the bellows (1) and be assembled as a reinforcing ring (6), as well as means (20) for blocking the annular portions (10-13), each annular reinforcing portion (10-13) having an inner arc (14,16) and an outer arc (15, 17) of which the chords which subtend them have lengths at the most equal to the inner diameter (3) of the bellows (1), bellows characterized in that the inner chord of at least one of the annular portions (12, 13) is at least as large as the outer chord thereof.

2. The bellows of Claim 1, characterized in that at least one of the annular reinforcing portions (12, 13) has an inner chord (16) and an outer chord (17) which are parallel and of the same length.

3. The bellows of Claim 2, characterized in that the reinforcing ring comprises two identical annular portions (10, 11) each having an inner chord (14) and an outer chord (15) of which the sagittae merge and of which the distances to the axis of the bellows are equal, the length of the inner chord being slightly greater than one third of the length of the outer chord.

4. The bellows of Claim 3, characterized in that the reinforcing ring (6) comprises four annular portions (10-13) joined along two parallel planes (18, 19) equidistant from the axis (5) of the bellows (1).

5. The bellows of one of Claims 1 to 4, characterized in that the means for blocking the reinforcing ring comprise a blocking ring (20) whose outer diameter is substantially equal to the diameter of the inner part (3) of the bellows (1).

6. The bellows of one of Claims 1 to 5, characterized in that stiffening reinforcements having a flat outer annular edge, each locked by a ring, are provided around the corrugations.

7. The bellows of one of Claims 1 to 6, characterized in that outer reinforcing rings (21) are provided.

8. Connecting sleeve provided with at least one annular groove adapted to receive an annular sealing gasket, of determined inner and outer diameters, in which the gasket comprises annular portions adapted to be introduced into the part of inner diameter of the sleeve and be assembled to form the gasket, as well as means for blocking the annular portions of the gasket, each annular portion having an inner arc and an outer arc of which the chords which subtend them have lengths at the most equal to the inner diameter of the sleeve, said sleeve being characterized in that the inner chord of a least one of the annular portions of the gasket is at least as large as the outer chord thereof.

9. Tubular body provided with at least one annular groove adapted to receive an annular body, of determined inner and outer diameters, in which the annular body comprises annular portions adapted to be introduced into the part of inner diameter of the tubular body and be assembled to form the annular body, as well as means for blocking the annular portions of the annular body, each annular portion having an inner arc and an outer arc of which the chords which subtend them have lengths at least equal to the inner diameter of the tubular body, characterized in that the inner chord of a least one of the annular portions of the annular body is at least as large as the outer chord thereof.

Fig. 2

FIG. 1

Fig. 4

FIG. 3

Fig. 6

FIG. 5

FIG. 7

Fig. 8

FIG. 9

Fig. 10

FIG. 11

FIG. 12